# EUROPÄISCHE PATENTSCHRIFT

(11) **EP 3 044 184 B1**
(45) Veröffentlichungstag und Bekanntmachung des Hinweises auf die Patenterteilung: **06.11.2019**
(21) Anmeldenummer: 14759149.9
(22) Anmeldetag: 03.09.2014
(51) Int. Cl.: B29C 48/00

(54) **VERFAHREN ZUR HERSTELLUNG VON BETA-ALUMINIUMOXIDKERAMIK DURCH EXTRUSION EINER MISCHUNG ENTHALTEND EINER NATRIUMVERBINDUNG**
METHOD OR PRODUCING BETA-ALUMINUM OXIDE CERAMICS OBTAINABLE BY EXTRUSION OF A MIXTURE THAT CONTAINS A SODIUM COMPOUND
PROCÉDÉ DE FABRIQUER UNE CÉRAMIQUE DE BÊTA-OXYDE D'ALUMINIUM OBTENUE PAR EXTRUSION D'UN MÉLANGE CONTENANT UN COMPOSÉ DE SODIUM

(30) Priorität: 12.09.2013 EP 13184112
(43) Veröffentlichungstag der Anmeldung: 20.07.2016
(73) Patentinhaber: BASF SE, 67056 Ludwigshafen am Rhein (DE)
(72) Erfinder: DÜRR, Anna, Katharina, 67061 Ludwigshafen (DE); HUBER, Günther, 67071 Ludwigshafen (DE); EICHHOLZ, Christian, 68165 Mannheim (DE); FREITAG, Katrin, 04087-003 Sao Paulo (BR); MEUER, Stefan, 67549 Worms (DE)
(74) Vertreter: BASF IP Association
(86) Internationale Anmeldenummer: PCT/EP2014/068671
(87) Internationale Veröffentlichungsnummer: WO 2015/036291

(56) Entgegenhaltungen:
- EP-A1- 0 675 558
- EP-A2- 0 074 274
- JP-A- H0 834 664
- JP-A- H0 834 665
- US-A- 4 020 134
- US-A- 4 797 269

## Beschreibung

Die vorliegende Erfindung betrifft die Verwendung einer Zusammensetzung enthaltend Aluminiumoxid und eine Natriumverbindung zur Herstellung eines keramischen Formkörpers, ein Verfahren zur Herstellung von keramischen Formkörpern, sowie eine formbare Zusammensetzung jeweils wie in den Ansprüchen definiert.

Natriumhaltiges Aluminiumoxid, auch Natriumaluminat genannt, ist bekannt. Es wird auch in Fachkreisen und der Literatur als β-Aluminiumoxid oder β-Al₂O₃ bezeichnet, siehe zum Beispiel Ullmann's Encyclopedia of Industrial Chemistry, 6th Edition, 2000 Electronic Release, Wiley, Stichwort: "Aluminium Oxide" Punkt 1.6. Das molare Verhältnis von Na₂O : Al₂O₃ im Natriumaluminat liegt üblicherweise im Bereich von 1:1 bis 1:11.

Der Begriff β-Aluminiumoxid wird in Fachkreisen und der Literatur insbesondere für Natriumaluminate verwendet, die eine hexagonale Kristallstruktur mit idealerweise der Raumgruppe P6₃ /mmc haben.

Natriumaluminat mit einer hexagonalen Kristallstruktur jedoch idealerweise einer Raumgruppe R/3m wird als β"-Aluminiumoxid bezeichnet.

Im Folgenden wird der Begriff "Beta-Aluminiumoxid" verwendet der sowohl β-Aluminiumoxid als auch β"-Aluminiumoxid, letzteres bevorzugt, umfassen soll. Ferner soll der hierin verwendete Begriff Beta-Aluminiumoxid jegliche Mischungen oder Phasengemische aus β-Aluminiumoxid und β"-Aluminiumoxid umfassen, vorzugsweise solche in welchen der Anteil an β"-Aluminiumoxid größer als 90 Gew.-%, besonders bevorzugt größer als 95 Gew.-% ist.

Formkörper aus Beta-Aluminiumoxid werden häufig als Natriumionen-leitende Festelektrolyte beispielsweise in einer elektrochemischen Natrium-Schwefel-Zelle (in der Fachwelt auch als "NaS-Batterie" bezeichnet), einer Natrium/Nickelchlorid-Zelle (auch als "Zebra-Batterie" bezeichnet) oder bei der elektrochemischen Herstellung von elementarem Natrium verwendet.

Derartige Formkörper aus Beta-Aluminiumoxid werden üblicherweise nach folgendem Schema hergestellt, wie beispielsweise in EP 0 074 274 A2 beschrieben:
Mischen der Natriumkomponente, zum Beispiel Natriumcarbonat, des α-Aluminiumoxids und eventuell weiterer Komponenten, thermische Behandlung der Mischung (auch "Kalzinieren" genannt) unter Bildung von Natriumaluminat, Herstellung einer formbaren Masse aus diesem Natriumaluminat, Formgebung, zum Beispiel durch isostatisches Pressen oder Extrusion, gegebenenfalls weitere thermische Behandlung des Formkörpers.

Aus verfahrensökonomischen Gründen ist es wünschenswert die formbare Masse direkt aus der Natriumkomponente, Aluminiumoxid - beispielsweise α-Aluminiumoxid, γ-Aluminiumoxid - und gegebenenfalls weiterer Komponenten herzustellen, also ohne diese Mischung vorab zu Kalzinieren.

JP 08-034664 A (NGK Insulators Inc.) beschreibt in Beispiel 2 ein Herstellungsverfahren eines β-Aluminiumoxid-Festelektrolyten in dem α-Aluminiumoxidpulver, Natriumoxalat, Magnesiumoxid suspendiert, gemahlen und zu Granulat sprühgetrocknet werden und das Granulat durch isostatisches Pressen in Formteile überführt und diese bei maximal 1600 °C zu β-Aluminiumoxid-Sinterkörpern gebrannt werden.

JP 08-034664 A offenbart nicht Extrusion als Formgebungsverfahren.

EP 0 074 274 A (Ford Motor Company Limited) offenbart die Extrusion eines β"-Aluminiumoxid-Vorläufers, der durch Kalzinieren von Natriumcarbonat, Lithiumnitrat und eines bestimmten α-Aluminiumoxids gewonnen wurde (Example 21(a) ff).

EP 0 074 274 A beschreibt weder die Extrusion eines nicht-kalzinierten Vorläufers noch die Verwendung von Natriumoxalat.

Aufgabe der vorliegenden Erfindung war es den Nachteilen des Stands der Technik abzuhelfen und ein einfaches Verfahren oder eine formbare Zusammensetzung zur Herstellung von keramischen Formkörpern mittels Extrusion zur Verfügung zu stellen.

Die Aufgabe wurde durch das in den Ansprüchen definierte Verfahren und die in den Ansprüchen definierte Verwendung und formbare Zusammensetzung gelöst.

Die erfindungsgemäße Zusammensetzung enthält als Komponente A) 55 bis 90 Gew.-% vorzugsweise 70 bis 80 Gew.-%, besonders bevorzugt 72 bis 78 Gew.-% Aluminiumoxid, vorzugsweise α-Aluminiumoxid, jeweils bezogen auf die Summe der Komponenten A) bis D). Aluminiumoxid ist bekannt. α-Aluminiumoxid wird beispielsweise unter dem Handelsnamen Nabalox® von Firma Nabaltec angeboten.

Die Partikelgröße des Aluminiumoxids der Komponente A), vorzugsweise α-Aluminiumoxids, liegt üblicherweise im Bereich von 0,1 bis 5 µm, vorzugsweise im Bereich von 0,5 µm bis 1,5 µm.

Als Komponente B) enthält die erfindungsgemäße Zusammensetzung eine Natriumverbindung, die bei pH 7 bei 20 °C eine Löslichkeit in Wasser von ≤ 300 g/l (sprich: 300 Gramm oder weniger) hat und sich thermisch, vorzugsweise in Gegenwart von Sauerstoff, praktisch ausschließlich in Natriumoxid als einzigen Feststoff umwandeln lässt, vorzugsweise bei einer Temperatur im Bereich von 1200 bis 1700 °C und vorzugsweise ohne dass korrosive oder andere unerwünschte Nebenprodukte - beispielsweise Stickstoffoxide, Halogene, wie Fluor, Chlor, kohlenstoffreiche Ablagerungen wie Ruß -entstehen. Die Komponente B) schließt Natriumoxid als solches ein.

Die Löslichkeit der Natriumverbindung der Komponente B) in Wasser bei 20 °C und pH 7 liegt im Bereich von 0 g/l, vorzugsweise von 0,0001 g/l bis einschließlich 300 g/l, vorzugsweise im Bereich von 0,0001 g/l bis einschließlich 300 g/l.

Als Komponente B) enthält die erfindungsgemäße Zusammensetzung vorzugsweise eine Natriumverbindung ausgewählt aus der Gruppe bestehend aus: Natriumoxalat, Natriumcarbonat, Natriumhydrogencarbonat, Natriumcyanat

Eine besonders bevorzugte Natriumverbindung B) ist Natriumoxalat mit oder ohne Kristallwasser. Die Mengenangaben des Natriumoxalats beziehen sich hierin auf den Reinstoff, also beispielsweise ohne Kristallwasser.

Die Menge der Komponente B), vorzugsweise des Natriumoxalats ohne Kristallwasser, bezogen auf die Summe der Komponente A) bis D), liegt im Bereich von 5 bis 35 Gew.-%, vorzugsweise im Bereich von 15 bis 30 Gew.-%.

Natriumoxalat ist bekannt und im Handel erhältlich. Es kann allerdings für die erfindungsgemäße Verwendung beispielsweise aus Oxalsäure und der stöchiometrischen Menge Natriumhydroxid, vorzugsweise wässrige Natriumhydroxidlösung, in situ hergestellt werden.

Als Komponente C) kann die erfindungsgemäße Zusammensetzung im Bereich von 0 bis 15 Gew.-%, vorzugsweise im Bereich von 0,5 bis 9 Gew.-%, bezogen auf die Summe der Komponenten A) bis D), eine Magnesiumverbindung und/oder eine Lithiumverbindung enthalten, ausgewählt aus der Gruppe bestehend aus: Magnesiumoxid, Magnesiumcarbonat, Magnesiumnitrat, Lithiumoxid, Lithiumcarbonat, Lithiumnitrat.

In einer Ausführungsform enthält die Komponente C) entweder eine, wie oben definierte, Magnesiumverbindung - vorzugsweise Magnesiumoxid- oder eine, wie oben definierte, Lithiumverbindung - vorzugsweise Lithiumoxid - jeweils in den oben für die Komponente C) definierten Mengenbereichen.

Die erfindungsgemäße Zusammensetzung kann als Komponente D) 0 bis 30 Gew.-%, vorzugsweise 0,2 bis 5 Gew.-% Zirkoniumdioxid (ZrO₂) enthalten, welches beispielsweise mit Yttriumionen und/oder Magnesiumionen stabilisiert sein kann.

In einer bevorzugten Ausführungsform enthält die erfindungsgemäße Zusammensetzung als Komponente D) Zirkoniumdioxid (ZrO₂), vorzugsweise mit Yttriumionen stabilisiertes Zirkoniumdioxid (ZrO₂), jeweils in den oben für die Komponente D) definierten Mengenbereichen. Zirkoniumdioxid (ZrO₂), auch solches mit Yttriumionen stabilisiertes, ist bekannt und kommerziell verfügbar.

Die Summe der Komponenten A) bis D) ergibt 100 Gew.-%

Die erfindungsgemäße Zusammensetzung wird zur Herstellung eines keramischen Formkörpers, vorzugsweise einer Natriumionen-leitenden Keramik durch Extrusion verwendet, wobei die Zusammensetzung vor der Extrusion nicht kalziniert wird. Hierzu wird üblicherweise die erfindungsgemäße Zusammensetzung, gegebenenfalls unter Zusatz von Additiven, in einem Suspendiermittel, üblicherweise Wasser und/oder Alkoholen wie C₁- bis C₈-Alkoholen, beispielsweise Ethanol, n-Propanol, i-Propanol, Cyclohexanol, vorzugsweise Wasser suspendiert.

Die Menge der erfindungsgemäßen Zusammensetzung A) bis D), bezogen auf besagte Suspension liegt in der Regel im Bereich von 20 bis 60 Gew.-%, vorzugsweise im Bereich von 40 bis 50 Gew.-%.

Die erhaltene Suspension kann dann direkt zur formbaren Zusammensetzung weiterverarbeitet werden, wenn das Suspendiermittel aus Wasser ausgewählt ist und die Komponenten A) bis D) unter Zusatz eines Binders und gegebenenfalls anderer Additive suspendiert wurden.

In einer weiteren Ausführungsform kann die erhaltene Suspension gemahlen werden, vorzugsweise in einer Kugelmühle, wobei die Zusammensetzung nach der Mahlung vorzugsweise eine enge Korngrößenverteilung D₅₀ im Bereich von 0,5 bis 1,5 µm (Mikrometer), vorzugsweise von ungefähr 1 µm hat. Die Korngrößenverteilung wird beispielsweise mit dem Partikelgrößenmessgerät Mastersizer 2000 der Firma Malvern Instruments Ltd. bzw. Malvern Instruments GmbH gemessen. Das Gerät Mastersizer 2000 misst die Größe von Partikeln mit Laserbeugung. Dabei wird die Intensität des gestreuten Lichts eines Laserstrahls gemessen, während dieser eine dispergierte Partikelprobe durchdringt. Anhand dieser Daten wird dann die Größe der Partikel aus dem erzeugten Beugungsmuster berechnet.

Vorzugsweise wenn die erfindungsgemäße Zusammensetzung wie oben beschrieben suspendiert und gemahlen wurde, wird die so erhaltene Suspension üblicherweise mit den üblichen Verfahren der Trocknung, vorzugsweise durch Sprühtrocknung, getrocknet, gegebenenfalls unter Zusatz eines Binders und/oder anderer Additive und liegt dann üblicherweise als pulvriger oder vorzugsweise granulärer Feststoff vor.

Der so erhaltene pulvrige oder vorzugsweise granuläre Feststoff wird in einem Suspendiermittel ausgewählt aus Wasser suspendiert, unter Zusatz bestimmter sogenannter "Bindersysteme", die die so entstandene Mischung (in Fachkreisen auch als "Versatz" bezeichnet) knetbar und extrudierbar machen.

Als Bindersysteme sind hierin chemische Verbindungen und/oder Zusammensetzungen zu verstehen, welche die Zusammensetzung enthaltend die Komponenten A) bis D), üblicherweise in der oben beschriebenen Suspension, in eine knetbare und extrudierbare Masse umwandeln.

Gut geeigente Bindersysteme enthalten oligomere und/oder polymere chemische Verbindungen die Monomereinheiten als Homo-Monomer oder Co-Monomer enthalten, welche ein Heteroatom oder mehrere Heteroatome in der Monomereinheit enthalten, wobei die Hetreoatome ausgewählt sind aus der Gruppe bestehend aus Stickstoff, Sauerstoff und Schwefel. Beispiele für solche oligomere und/oder polymere chemische Verbindungen sind Polyvinylpyrrolidon, Polyethylenglycol, Cellulosederivate.

Weitere als Bindersystem brauchbare Zusammensetzungen sind beispielsweise in EP 0 074 274 A2, insbesondere auf Seite 9, Zeile 17 bis Seite 15, Zeile 6, beschrieben.

Sehr gut geeignete Bindersysteme sind solche, welche durch die Komponente B), vorzugsweise Natriumoxalat, nicht "ausgesalzt" werden, was bedeutet, dass bei der Mischung des Bindersystems mit der erfindungsgemäßen Komponente B) im Beisein oder auch bei Abwesenheit von weiteren erfindungsgemäßen Komponenten A) und/oder C) und/oder D) in einem Suspendiermittel wie oben beschrieben, der Binder nicht teilweise oder vollständig, üblicherweise unter Bildung einer leicht fließenden oft schmierigen, nicht-knetbaren Masse ausgefällt wird, sondern sich eine knetbare und extrudierbare Masse bildet.

Die Menge der erfindungsgemäßen Zusammensetzung A) bis D) in fester Form, bezogen auf die komplette, voran beschriebene Suspension wird üblicherweise so gewählt, dass eine formbare, vorzugsweise knetbare, Masse entsteht und liegt beispielsweise im Bereich von 10 bis 60 Gew.-%, vorzugsweise 20 bis 50 Gew.-%.

Die oben beschriebene, formbare, vorzugsweise knetbare Masse wird dann mit dem Verfahren der Extrusion in einem Formkörper umgewandelt. Die Geometrie dieser Formkörper kann sehr mannigfaltig sein, beispielsweise vieleckige, flache Körper oder massive Stäbe mit vieleckiger oder runder oder ovaler Querschnittsgeometrie oder lange Hohlkörper jeglicher Querschnittsgeometrie, beispielsweise rechteckig, quadratisch, vieleckig, oval, rund welche unverschlossen, einseitig oder beidseitig verschlossen sein können,

Gut geeignete Formkörper sind beispielsweise Stäbe jeglicher Querschnittsgeometrie, zum Beispiel rechteckig, quadratisch, vieleckig, oval, rund, vorzugsweise haben die Stäbe zylindrische Geometrie; weiterhin bevorzugt sind als Formkörper lange Hohlkörper jeglicher Querschnittsgeometrie, beispielsweise rechteckig, quadratisch, vieleckig, oval, rund, besonders bevorzugt sind zylindrische Rohre die beidseitig offen oder einseitig oder beidseitig verschlossen sein können.

Ganz besonders bevorzugt als Formkörper sind einseitig geschlossene zylindrische Rohre.

Die oben beschriebenen, durch Extrusion erhaltenen Formkörper werden in der Fachwelt, wie hierin stellenweise auch, als "Grünkörper" bezeichnet.

Geeignete Extrusionsverfahren zum Erhalt eines oben beschriebenen Formkörpers oder Grünkörpers sind bekannt und beispielsweise in EP 0 074 274 A2 beschrieben.

Vereinfacht gesagt wird die oben beschriebenen formbare, vorzugsweise knetbaren Masse in einem handelsüblichen Extruder der mit einer Düse für die gewünschte Geometrie des Formkörpers ausgestattet ist, beispielsweise Rundschlitzdüse, extrudiert.

Der mit der erfindungsgemäßen Zusammensetzung durch Extrusion erhaltene oben beschriebene Grünkörper, hierin auch als "erfindungsgemäßer Grünkörper" bezeichnet, wird üblicherweise mit bekannten Methoden, beispielsweise auf einem Rollentrockner bei Temperaturen im Bereich von 15 bis 60 °C, vorzugsweise von 20 bis 35 °C getrocknet und dann bei einer Temperatur im Bereich von 1200°C bis 1700°C, vorzugsweise im Bereich von 1500 bis 1650°C, vorzugsweise in Gegenwart von Sauerstoff, beispielsweise Luft, sowie vorzugsweise gekapselt in einem Sinterhilfsmittel thermisch behandelt.

Nach derzeitigem Kenntnisstand geht der oben genannte erfindungsgemäße Grünkörper bei der oben genannten thermischen Behandlung in einen keramischen Formkörper unter Bildung des gewünschte Beta-Aluminiumoxids, vorzugsweise β"-Aluminiumoxids, über.

Dieser Beta-Aluminiumoxidformkörper, vorzugsweise β"-Aluminiumoxidformkörper oder auch keramischer Formkörper, ist vorzugsweise eine Natriumionen-leitfähige Keramik, wie sie beispielsweise in J.L. Sudworth, R.H. Tilley, The Sodium Sulfur Battery, Chapman and Hall Ltd. 1985, ISBN 0 412 16490 6, Seiten 19 bis 79 beschrieben sind.

Gegenstand der vorliegenden Anmeldung ist auch ein Verfahren zur Herstellung von keramischen Formkörpern, worin man
i) 55 bis 90 Gew.-% Aluminiumoxid als Komponente A),
ii) 5 bis 35 Gew.-% einer Natriumverbindung die bei pH 7 bei 20 °C eine Löslichkeit in Wasser von ≤ 300 g/l hat und sich thermisch praktisch ausschließlich in Natriumoxid als einzigen Feststoff umwandeln läßt als Komponente B),
iii) 0 bis 15 Gew.-% einer Magnesiumverbindung und/oder einer Lithiumverbindung ausgewählt aus der Gruppe bestehend aus: Magnesiumoxid, Magnesiumcarbonat, Magnesiumnitrat, Lithiumoxid, Lithiumcarbonat, Lithiumnitrat als Komponente C),
   und
iv) 0 bis 30 Gew.-% Zirkoniumdioxid als Komponente D) mit Wasser und/oder Alkoholen mischt und eine Suspension erhält, gegebenenfalls
v) die Zusammensetzung aus Schritt
iv) mahlt, gegbenenfalls
vii) trocknet und
viii) durch Kombination mit einem Suspendiermittel ausgewählt aus Wasser, einem Binder und gegegbenenfalls anderen Additiven in eine formbare Zusammensetzung überführt,
ix) diese extrudiert und
x) im Temperaturbereich von 1200 °C bis 1700 °C thermisch behandelt,
wobei die Zusammensetzung vor der Extrusion nicht kalziniert wird.

Für die Komponente A) bis D), deren Mengenbereiche und alle weiteren Merkmale des vorstehend beschriebenen Verfahrens gilt ausdrücklich das hierin beschriebene.

Gegenstand der vorliegenden Anmeldung ist auch eine formbare Zusammensetzung die zur Herstellung von keramischen Formkörpern, vorzugsweise Natriumionen-leitfähigen Keramiken, vorzugsweise in Form von einseitig geschlossenen Zylindern, geeignet ist woher die formbare Zusammensetzung erhältlich ist wie oben unter i) bis viii) inklusive aller Ausführungsformen beschrieben. Für die Komponenten A) bis D) gilt in Bezug auf die formbare Zusammensetzung ausdrücklich das hierin beschriebene.

Die erfindungsgemäße Zusammensetzung der Komponenten A) bis D), vorzugsweise die formbare Zusammensetzung wie oben beschrieben, hat die Vorteile, dass sie zu praktisch keinen "Ausblühungen" der Natriumkomponente, hier Komponente B), auf der Oberfläche der erfindungsgemäßen Grünkörper führt, die "richtige" Konsistenz, nämlich genügend hohe Zähigkeit für die Extrusion hat, die Komponente B) bei der thermischen Behandlung außer Natriumoxid praktisch keine Rückstände hinterlässt sowie die Komponente B) verhindert, dass die Bindersysteme aus der Suspension ausfallen.

### Beispiele

Luvitec®K90 ist eine eingetragene Marke der BASF SE. Das Produkt ist ein Vinylpyrrolidon-Homopolymer mit einer Molmasse Mw von ca. 1400 kDa und einer Molmasse Mn von ca. 325 kDa. Weiteres zum Produkt ist der Broschüre "PVP and more ... LUVITEC®, LUVICROSS® und COL-LACRAL®VAL - Spezialpolymere für technische Anwendungen" (Version von 01/2010) der BASF SE zu entnehmen.

Methocel™ K4M Premium ist eine Marke von DowWolff Cellulosics. Das Produkt ist ein Methylester der Cellulose, auch als Zusatzstoff E 461 bekannt.

Vergleich von Natriumformiat und Natriumoxalat mit Polyvinylpyrrolidon (Luvitec® K90) in Wasser.

### Beispiel V1 (zum Vergleich):

Zu 50 g einer 1 Gew.-%igen Lösung von Luvitec® K90 in Wasser wurde unter Rühren langsam 18 g Natriumformiat bis zur Sättigung zudosiert. Luvitec®K90 fiel als schmieriger Niederschlag aus.

### Beispiel 1 (erfindungsgemäß):

Zu 50 g einer 1 Gew.-%igen Lösung von Luvitec ®K90 in Wasser wurde unter Rühren langsam 6,8 g Natriumoxalat zudosiert. Es trat kein schmieriger Niederschlag auf und unlösliches Natriumoxalat setzte sich am Behälterboden ab.

Vergleich von Natriumformiat und Natriumoxalat mit Methylcellulose (Methocel™ K4M Premium von DowWolff Cellulosics) in Wasser.

### Beispiel V2 (zum Vergleich):

Zu 50 g einer 1 Gew.-%igen Lösung von Methocel™ K4M Premium in Wasser wurde unter Rühren langsam 6,8 g Natriumformiat bis zur Sättigung zudosiert. Es trat Schaumbildung auf.

### Beispiel 2 (erfindungsgemäß):

Zu 50 g einer 1 Gew.-%igen Lösung von Methocel™ K4M Premium in Wasser wurde unter Rühren langsam 6,8 g Natriumoxalat zudosiert. Es trat kein Schäumen auf und unlösliches Natriumoxalat setzte sich am Behälterboden ab.

Die Beispiele und Vergleichsbeispiele zeigen, dass in Wasser gut lösliche Natriumsalze (Natriumformiat) zum Ausfallen bzw. Aussalzen der Bindersysteme führen, im Gegensatz zu in Wasser schlecht löslichen Natriumsalzen (Natriumoxalat).

## Patentansprüche

1. Verwendung einer Zusammensetzung enthaltend
A) 55 bis 90 Gew.-% Aluminiumoxid,
B) 5 bis 35 Gew.-% einer Natriumverbindung, die bei pH 7 bei 20 °C eine Löslichkeit in Wasser von ≤ 300 g/l hat und sich thermisch praktisch ausschließlich in Natriumoxid als einzigen Feststoff umwandeln läßt,
C) 0 bis 15 Gew.-% einer Magnesiumverbindung und/oder einer Lithiumverbindung ausgewählt aus der Gruppe bestehend aus: Magnesiumoxid, Magnesiumcarbonat, Magnesiumnitrat, Lithiumoxid, Lithiumcarbonat, Lithiumnitrat und
D) 0 bis 30 Gew.-% Zirkoniumdioxid,
jeweils bezogen auf die Summe der Komponenten A) bis D), zur Herstellung eines keramischen Formkörpers durch Extrusion, wobei die Zusammensetzung vor der Extrusion nicht kalziniert wird und in einem Suspendiermittel ausgewählt aus Wasser unter Zusatz eines Binders und gegebenenfalls anderer Additive, suspendiert ist.

2. Verwendung nach Anspruch 1, wobei die Natriumverbindung ausgewählt wird aus der Gruppe bestehend aus Natriumoxalat, Natriumcarbonat, Natriumhydrogencarbonat und Natriumcyanat.

3. Verwendung nach Anspruch 1 oder 2, wobei der keramische Formkörper eine Natriumionen-leitfähige Keramik ist.

4. Verfahren zur Herstellung von keramischen Formkörpern, worin man
i) 55 bis 90 Gew.-% Aluminiumoxid als Komponente A),
ii) 5 bis 35 Gew.-% einer Natriumverbindung, die bei pH 7 bei 20 °C eine Löslichkeit in Wasser von ≤ 300 g/l hat und sich thermisch praktisch ausschließlich in Natriumoxid als einzigen Feststoff umwandeln läßt, als Komponente B),
iii) 0 bis 15 Gew.-% einer Magnesiumverbindung und/oder einer Lithiumverbindung ausgewählt aus der Gruppe bestehend aus: Magnesiumoxid, Magnesiumcarbonat, Magnesiumnitrat, Lithiumoxid, Lithiumcarbonat, Lithiumnitrat als Komponente C),
und
iv) 0 bis 30 Gew.-% Zirkoniumdioxid als Komponente D), jeweils bezogen auf die Summe der Komponenten A) bis D), mit Wasser und/oder Alkoholen mischt und eine Suspension erhält, gegebenenfalls
v) die Zusammensetzung aus Schritt
iv) mahlt, gegebenenfalls
vii) trocknet und
viii) durch Kombination mit einem Suspendiermittel ausgewählt aus Wasser und einem Binder und gegebenenfalls anderen Additiven, in eine formbare Zusammensetzung überführt,
ix) diese extrudiert und
x) im Temperaturbereich von 1200 °C bis 1700 °C thermisch behandelt,
wobei die Zusammensetzung vor der Extrusion nicht kalziniert wird.

5. Verfahren nach Anspruch 4, wobei die Zusammensetzung nach der Mahlung in v) eine Korngrößenverteilung von D₅₀ im Bereich von 0,5 bis 1,5 Mikrometer hat.

6. Verfahren nach Anspruch 4 bis 5, wobei in iii) entweder eine Magnesiumverbindung oder eine Lithiumverbindung eingesetzt wird.

7. Verfahren nach den Ansprüchen 4 bis 6, wobei in ii) die Natriumverbindung ausgewählt wird aus der Gruppe bestehend aus Natriumoxalat, Natriumcarbonat, Natriumhydrogencarbonat, und Natriumcyanat.

8. Verfahren nach den Ansprüchen 4 bis 7, wobei in ii) Natriumoxalat eingesetzt wird.

9. Formbare Zusammensetzung, die zur Herstellung von keramischen Formkörpern geeignet ist, erhältlich nach einem Verfahren wie in i) bis viii) der Ansprüche 4 bis 8 definiert, und worin die Komponenten A) bis D) in einer Menge im Bereich von 10 bis 60 Gew.-%, bezogen auf die formbare Masse, vorliegt.

## Claims

1. The use of a composition comprising
A) from 55 to 90% by weight of aluminum oxide,
B) from 5 to 35% by weight of a sodium compound which at a pH of 7 at 20°C has a solubility in water of ≤ 300 g/l and can be converted by thermal means virtually exclusively into sodium oxide as only solid,
C) from 0 to 15% by weight of a magnesium compound and/or a lithium compound selected from the group consisting of: magnesium oxide, magnesium carbonate, magnesium nitrate, lithium oxide, lithium carbonate, lithium nitrate and
D) from 0 to 30% by weight of zirconium dioxide, in each case based on the sum of the components A) to D), wherein the composition is not calcined prior to the extrusion and is suspended in a suspension medium selected from water with addition of a binder and optionally other additives for producing a shaped ceramic body by extrusion.

2. The use according to claim 1, wherein the sodium compound is selected from the group consisting of sodium oxalate, sodium carbonate, sodium hydrogencarbonate and sodium cyanate.

3. The use according to claim 1 or 2, wherein the shaped ceramic body is a ceramic capable of conducting sodium ions.

4. A process for producing shaped ceramic bodies, wherein
i) from 55 to 90% by weight of aluminum oxide as component A),
ii) from 5 to 35% by weight of a sodium compound which at a pH of 7 and 20°C has a solubility in water of ≤ 300 g/l and can be converted by thermal means virtually exclusively into sodium oxide as only solid, as component B),
iii) from 0 to 15% by weight of a magnesium compound and/or a lithium compound selected from the group consisting of: magnesium oxide, magnesium carbonate, magnesium nitrate, lithium oxide, lithium carbonate, lithium nitrate as component C), and
iv) from 0 to 30% by weight of zirconium dioxide as component D), in each case based on the sum of the components A) to D), are mixed with water and/or alcohols to give a suspension, optionally
v) the composition from step
iv) is milled, optionally
vii) dried and
viii) converted by combining with a suspension medium selected from water and a binder and optionally other additives, into a moldable composition,
ix) the latter is extruded and
x) treated thermally in the temperature range from 1200°C to 1700°C,
wherein the composition is not calcined prior to the extrusion.

5. The process according to claim 4, wherein the composition after milling in v) has a particle size distribution D₅₀ in the range from 0.5 to 1.5 microns.

6. The process according to either of claims 4 and 5, wherein either a magnesium compound or a lithium compound is used in iii).

7. The process according to any of claims 4 to 6, wherein the sodium compound in ii) is selected from the group consisting of sodium oxalate, sodium carbonate, sodium hydrogen carbonate, and sodium cyanate.

8. The process according to any of claims 4 to 7, wherein sodium oxalate is used in ii).

9. A moldable composition which is suitable for producing shaped ceramic bodies and is obtainable by a process as defined in i) to viii) of claims 4 to 8, and in which the components A) to D) are present in an amount in the range from 10 to 60% by weight, based on the moldable composition.

## Revendications

1. Utilisation d'une composition contenant :
A) 55 à 90 % en poids d'oxyde d'aluminium,
B) 5 à 35 % en poids d'un composé de sodium, qui présente à pH 7 à 20 °C une solubilité dans l'eau ≤ 300 g/l et peut être transformé thermiquement pratiquement exclusivement en oxyde de sodium sous la forme d'un solide unique,
C) 0 à 15 % en poids d'un composé de magnésium et/ou d'un composé de lithium choisis dans le groupe constitué par : l'oxyde de magnésium, le carbonate de magnésium, le nitrate de magnésium, l'oxyde de lithium, le carbonate de lithium, le nitrate de lithium, et
D) 0 à 30 % en poids de dioxyde de zirconium,
à chaque fois par rapport à la somme des composants A) à D), pour la fabrication d'un corps moulé céramique par extrusion, la composition n'étant pas calcinée avant l'extrusion, et étant suspendue dans un agent de suspension choisi parmi l'eau avec ajout d'un liant et éventuellement d'autres additifs.

2. Utilisation selon la revendication 1, dans laquelle le composé de sodium est choisi dans le groupe constitué par l'oxalate de sodium, le carbonate de sodium, l'hydrogénocarbonate de sodium et le cyanate de sodium.

3. Utilisation selon la revendication 1 ou 2, dans laquelle le corps moulé céramique est une céramique conductrice d'ions sodium.

4. Procédé de fabrication de corps moulés céramiques, selon lequel
i) 55 à 90 % en poids d'oxyde d'aluminium en tant que composant A),
ii) 5 à 35 % en poids d'un composé de sodium, qui présente à pH 7 à 20 °C une solubilité dans l'eau ≤ 300 g/l et peut être transformé thermiquement pratiquement exclusivement en oxyde de sodium sous la forme d'un solide unique, en tant que composant B),
iii) 0 à 15 % en poids d'un composé de magnésium et/ou d'un composé de lithium choisis dans le groupe constitué par : l'oxyde de magnésium, le carbonate de magnésium, le nitrate de magnésium, l'oxyde de lithium, le carbonate de lithium, le nitrate de lithium, en tant que composant C),
et
iv) 0 à 30 % en poids de dioxyde de zirconium en tant que composant D), à chaque fois par rapport à la somme des composants A) à D), sont mélangés avec de l'eau et/ou des alcools et une suspension est obtenue, éventuellement
v) la composition de l'étape iv) est broyée, éventuellement
vi) séchée et
vii) transformée en une composition façonnable par combinaison avec un agent de suspension choisi parmi l'eau et un liant et éventuellement d'autres additifs,
ix) celle-ci est extrudée, et
x) traitée thermiquement dans la plage de température allant de 1 200 °C à 1 700 °C,
la composition n'étant pas calcinée avant l'extrusion.

5. Procédé selon la revendication 4, selon lequel la composition présente après le broyage en v) une distribution des tailles de particules D₅₀ dans la plage allant de 0,5 à 1,5 micromètre.

6. Procédé selon les revendications 4 à 5, selon lequel un composé de magnésium ou un composé de lithium est utilisé en iii).

7. Procédé selon les revendications 4 à 6, selon lequel le composé de sodium en ii) est choisi dans le groupe constitué par l'oxalate de sodium, le carbonate de sodium, l'hydrogénocarbonate de sodium et le cyanate de sodium.

8. Procédé selon les revendications 4 à 7, selon lequel de l'oxalate de sodium est utilisé en ii).

9. Composition façonnable, qui est appropriée pour la fabrication de corps moulés céramiques, pouvant être obtenue par un procédé tel que défini en i) à viii) des revendications 4 à 8, et dans laquelle les composants A) à D) sont présents en une quantité dans la plage allant de 10 à 60 % en poids, par rapport à la matière façonnable.
